# EUROPÄISCHE PATENTANMELDUNG

(11) **EP 2 700 547 A2**
(43) Veröffentlichungstag der Anmeldung: **26.02.2014**
(21) Anmeldenummer: 13181298.4
(22) Anmeldetag: 22.08.2013
(51) Int. Cl.: B60R 25/10, B60R 25/102

(54) **Alarmeinrichtung mit einem Träger zum Einsatz in eine Rungenaufnahme**

(30) Priorität: 22.08.2012 AT 5008012 U
(71) Anmelder: Heinz, Martin, 3062 Kirchstetten (AT)
(72) Erfinder: Heinz, Martin, 3062 Kirchstetten (AT)
(74) Vertreter: Müllner, Martin

(57) **Zusammenfassung**

Die Erfindung betrifft eine Alarmeinrichtung, insbesondere für Lastkraftwagen mit portalähnlichen Rungen (2) mit Aufnahmen (3) zur Halterung von horizontalen Rungenlatten entlang der Längsseite der Ladefläche sowie dem Heck und einer Plane zur Abdeckung des Laderaums. Die Alarmeinrichtung (1) umfasst einen Träger, welcher im Wesentlichen die Dimension von Rungenlatten hat und mit seinen Enden in den Aufnahmen (3) an den Rungen (2) einsetzbar ist. An oder im Träger (4) ist ein Sensorantennenabschnitt (5) eines kapazitiven Abstandssensors vorgesehen, welcher sich in Längsrichtung des Trägers (4) erstreckt und mit einer Sensorsteuereinheit (6) verbunden ist, welche mit einer Eingabe/Ausgabe-Schnittstelle, einem kapazitiven Sensor, einer Alarmausgabeeinheit sowie einer Energieversorgung ausgestattet ist und am oder im Träger (4) angeordnet ist, und wobei im eingebauten Zustand der Alarmeinrichtung (1) der Sensorantennenabschnitt (5) elektrisch isoliert von den Rungen (2) des Lastkraftwagen angeordnet ist, und die Sensorsteuereinheit (6) mittels eines elektrisch leitenden Kontakts (7) mit einem Rungen (2) des Lastkraftwagens in Verbindung steht.

## Beschreibung

### Technisches Gebiet

Die Erfindung betrifft eine Alarmeinrichtung, insbesondere für Lastkraftwagen mit portalähnlichen Rungen mit Aufnahmen zur Halterung von horizontalen Rungenlatten entlang der Längsseite der Ladefläche sowie dem Heck und einer Plane zur Abdeckung des Laderaums.

### Stand der Technik

Alarmeinrichtungen für Fahrzeuge insbesondere für Lastkraftwagen betreffen vorwiegend die Sicherung der Fahrgastzelle. Bei Lastkraftwagen bzw. Sattelauflegern wird die Ladefläche oftmals nur durch einen einfachen Rungenaufbau welcher eine Plane trägt gesichert. Die Sicherung gegenüber unbefugtem Zugriff auf die wertvolle Ladung, beispielsweise auf unbewachten Autobahnparkplätzen, wird im Allgemeinen nur durch den Fahrer selbst gewährleistet. Zusätzliche Alarmeinrichtungen sind für den Anhänger aufgrund aufwändiger Verkabelungen umständlich. Auch detektieren herkömmliche Alarmanlagen nur den Einbruchsversuch nachdem bereits eine Beschädigung stattgefunden hat. Da auch die LKW-Plane selbst sehr teuer ist, wäre es wünschenswert potentielle Diebe bereits vor der Zerstörung dieser zu entdecken bzw. abzuschrecken.

### Kurzbeschreibung der Erfindung

Es ist also eine Aufgabe der Erfindung eine Alarmeinrichtung zu schaffen, welche den Laderaum eines Lastkraftwagens sichert und bereits vor einer etwaigen Beschädigung die Annäherung unbefugter Personen detektiert. Die Alarmeinrichtung soll dabei autonom ohne zusätzlich notwendige Verkabelungen bei herkömmlichen Ladungsraumaufbauten verwendet werden können.

Diese Aufgabe wird erfindungsgemäß dadurch gelöst, dass die Alarmeinrichtung einen Träger umfasst, welcher im Wesentlichen die Dimension von Rungenlatten hat und mit seinen Enden in den Aufnahmen an den Rungen einsetzbar ist, und dass an oder im Träger ein Sensorantennenabschnitt eines kapazitiven Abstandssensors vorgesehen ist, welcher sich in Längsrichtung des Trägers erstreckt und mit einer Sensorsteuereinheit verbunden ist, welche mit einer Eingabe/Ausgabe-Schnittstelle, einem kapazitiven Sensor, einer Alarmausgabeeinheit sowie einer Energieversorgung ausgestattet ist und am oder im Träger angeordnet ist, und wobei im eingebauten Zustand der Alarmeinrichtung der Sensorantennenabschnitt am oder im Träger elektrisch isoliert von den Rungen des Lastkraftwagen angeordnet ist, und die Sensorsteuereinheit mittels eines elektrisch leitenden Kontakts mit einem Rungen des Lastkraftwagens in Verbindung steht. Verwendet wird ein kapazitiver Sensor mit einem großen Kapazitätsbereich von ca. 80-450 pF. Durch die Sensorantenne ist es möglich praktisch die gesamte Länge der Alarmeinrichtung als Sensorfläche zu benutzen, wobei eine Detektion einer Annäherung an die Alarmeinrichtung in einem Abstand von 0 cm bis 100 cm durch die Eingabe/Ausgabe-Schnittstelle einstellbar ist. Die Eingabe/Ausgabe-Schnittstelle kann als Einstellschalter direkt an der Sensorsteuereinheit oder auch durch ein Funkmodul, beispielsweise eine Bluetooth-Schnittstelle, realisiert werden. Für den Betrieb ist eine eigene Stromversorgung mittels Akkus bzw. Batterien vorgesehen.

Aufgrund des besonders einfachen Aufbaus des Alarmsystems in Form einer Leiste, welche alle nötigen Elemente beinhaltet und somit autonom funktionsfähig ist, wobei im Wesentlichen die gesamte Länge der Leiste als Sensorfläche fungiert, kann eine derartige Alarmeinrichtung mit einem entsprechend gestalteten Träger auch zur Sicherung bei Fenstern und Türen von Fahrzeugen oder auch Gebäuden eingesetzt werden.

Gemäß einer möglichen Ausführungsform der Erfindung ist es vorgesehen, dass der Sensorantennenabschnitt ein Metallband oder ein Draht ist, welcher sich im Inneren des Trägers in dessen Längsrichtung erstreckt oder auf diesem angeordnet ist. Bei dieser Ausführungsform kann die Sensorsteuereinheit sowie der Sensorantennenabschnitt besonders einfach an oder in einer herkömmlichen Holzleiste untergebracht werden, wodurch sich die Alarmeinrichtung von einer herkömmlichen Rungenlatte kaum unterscheiden lässt.

Bei einer alternativen Ausführungsform der Erfindung ist es vorgesehen, dass der Sensorantennenabschnitt aus einem zwischen den beiden elektrisch isolierenden Endabschnitten des Trägers angeordneten Trägerabschnitt gebildet ist, welcher beispielsweise aus Aluminium gefertigt ist. In diesem Fall könnte man als Träger eine Aluminiumleiste verwenden, welche an den Enden mit isolierenden Abschnitten aus beispielsweise Kunststoff versehen ist. Bei dieser Ausführungsform dient beinahe der gesamte Träger als Sensorantennenabschnitt, wodurch eine besonders große Sensorfläche zur Verfügung steht und ein entsprechend großer Messbereich abgedeckt werden kann.

Ein weiteres Merkmal der Erfindung ist es, dass das Metallband oder der Draht oder der Trägerabschnitt jeweils mindestens eine Länge von 100mm aufweist. Ab einem Sensorantennenabschnitt dieser Länge ist es möglich einen Messabstand von mindestens 40 cm abzudecken, was für die meisten Anwendungen was die Annährung von Personen an den Laderaum des Lastkraftwagens betrifft, ausreichend ist.

Gemäß einem weiteren Merkmal der Erfindung ist es vorgesehen, dass der elektrisch leitende Kontakt zwischen Sensorsteuereinheit und Rungen des Lastkraftwagens ein gefederter Kontakt ist, welcher im eingesetzten Zustand der Alarmeinrichtung in die Aufnahmen der Rungen gegen diese vorgespannt ist und dadurch einen permanenten Kontakt zur Masse des Lastkraftwagens sicherstellt. Damit der kapazitive Sensor funktioniert, muss als Gegenstück zur Sensorfläche der zweite Pol geerdet sein, bzw. mit der Masse des Lastkraftwagens verbunden werden. Durch einen gefederten Kontakt wird sichergestellt, dass dieser Kontakt vorhanden ist und es sind keine zusätzlichen Verdrahtungen oder Verschraubungen mit den Rungen notwendig.

Schließlich ist es ein Merkmal der Erfindung, dass die Alarmausgabeeinheit bei Detektion eines Auslösesignals vom Sensor ein akustisches und/oder optisches Alarmsignal abgibt, und/oder über ein GSM-Modul verfügt und einen Alarmruf an einen Empfänger absendet, wobei nach Detektion eines Signals vom Sensor zuerst ein erstes Alarmsignal abgebbar ist und bei andauerndem Auslösesignal nach einem vorwählbaren Zeitabschnitt Δt ein zweites Alarmsignal und/oder ein Alarmruf abgebbar ist. Nähert sich ein potentieller Dieb dem gesicherten Bereich und unterschreitet dabei den eingestellten Messbereich des Sensors, wird zunächst ein erstes Alarmsignal abgegeben. Dies kann beispielsweise ein Warnton, dass Anschalten einer Beleuchtung oder auch die Wiedergabe einer Sprachnachricht sein. Beispielsweise kann die betreffende Person durch die Sprachnachricht aufgefordert werden, den Messbereich der Alarmeinrichtung wieder zu verlassen. Wenn innerhalb eines vorgewählten Zeitraums die betreffende Person den Messbereich verlässt, dann verstummt das erste Alarmsignal. Entfernt sich die Person nicht, so kann nach Abwarten des Zeitraums ein zweites Alarmsignal beispielsweise ein lauterer Alarmton oder ein Notruf über ein eingebautes GSM Modul abgegeben werden. Es versteht sich, dass auch mehrere unterschiedliche Alarmsignale hintereinander aktiviert werden können, sodass bei immer längerem Aufenthalt einer Person im Messbereich die Alarmsignale zunehmend intensiver werden.

### Kurze Beschreibung der Zeichnungsfiguren

Die Erfindung wird nun näher anhand der beiliegenden Zeichnungen erklärt, wobei
Fig. 1 schematisch eine Ausführungsform einer erfindungsgemäßen Alarmeinrichtung zeigt und
Fig. 2 schematisch eine alternative Ausführungsform einer erfindungsgemäßen Alarmeinrichtung zeigt.

### Beschreibung der Ausführungsarten

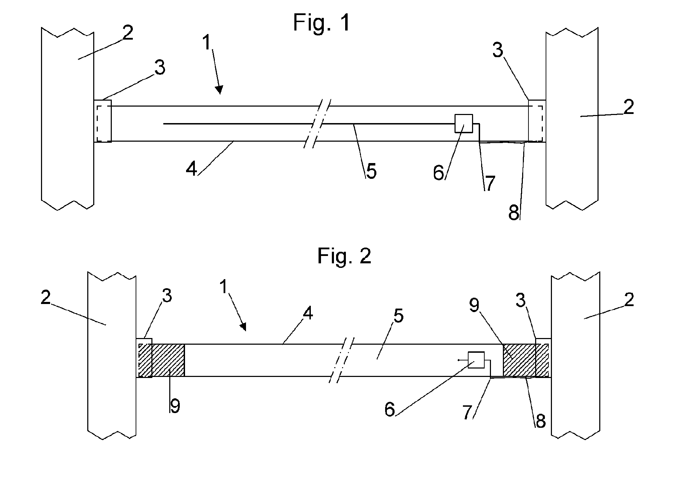

Fig. 1 zeigt schematisch eine mögliche Ausführungsform einer erfindungsgemäßen Alarmeinrichtung 1. Dargestellt sind Abschnitte von Rungen 2, welche an der Ladefläche eines Lastkraftwagens in regelmäßigen Abständen angeordnet sind. Die Rungen 2 weisen Aufnahmen 3 auf, welche für gewöhnlich zur Aufnahme von Rungenlatten dienen. Anstelle herkömmlicher Rungenlatten können jeweils Alarmeinrichtungen 1 entlang der gesamten Ladefläche angeordnet werden. Die Alarmeinrichtung 1 umfasst einen Träger 4, an oder in welchem die Sensorsteuereinheit 6 angeordnet ist. Ein Draht oder Metallband dient als Sensorantennenabschnitt 5 und damit als Sensorfläche für den kapazitiven Sensor. Die Sensorsteuereinheit 6 umfasst den kapazitiven Sensor, eine Eingabe/Ausgabe-Schnittstelle, eine Alarmausgabeeinheit sowie eine Energieversorgung. Die Eingabe/Ausgabe-Schnittstelle kann beispielsweise ein Funkmodul sein. Bei mehreren Alarmeinrichtungen 1 an einem Fahrzeug können die einzelnen Alarmeinrichtungen 1 entweder separat oder gemeinsam gesteuert bzw. geschalten werden. Zum Potentialausgleich für den Sensor ist ein weiterer Kontakt 7 vorgesehen, welcher die Sensorsteuereinheit 6 mit den Rungen 2 verbindet. Damit der Kontakt zu den Rungen 2 einfach und sicher hergestellt werden kann, sind gefederte Kontakte 8 vorgesehen. Der Träger 4 ist bei der Ausführungsform gemäß Fig. 1 aus einem elektrisch isolierenden Material, beispielsweise aus Holz oder Kunststoff gefertigt.

Bei der Ausführungsform gemäß Fig. 2 ist der Träger 4 größtenteils aus einem leitenden Material, beispielsweise aus Aluminium, hergestellt. Der leitende Mittelabschnitt bildet dabei den Sensorantennenabschnitt 5, welcher mit der Sensorsteuereinheit 6 verbunden ist. An den beiden Enden des Trägers 4 sind elektrisch isolierende Abschnitte 9 vorgesehen, welche verhindern, dass der Sensorantennenabschnitt 5 direkt mit den Rungen 2 in leitender Verbindung steht. Ein Kontakt 7 ist ebenfalls von dem Sensorantennenabschnitt 5 elektrisch isoliert und steht über einen gefederten Kontakt 8 zum Potentialausgleich mit den Rungen 2 in Verbindung.

Durch den kompakten Aufbau der Alarmeinrichtung 1 und der autonomen Funktionsweise kann diese sehr flexibel auch bei verschiedenen Fahrzeugen eingesetzt werden. Der geringe Preis sowie der einfache Einbau machen es möglich, auch bestehende Lastkraftwagenflotten mit dieser Alarmeinrichtung auf günstige Weise auszurüsten, ohne dass kostenintensive Standzeiten für den Umbau entstehen. Weiters verhindert die Alarmeinrichtung bereits Beschädigungen bevor es zu einem Einbruchsversuch in die Ladefläche kommt, wodurch teure Reparaturen an Planen und Bordwänden vermieden werden können.

## Patentansprüche

1. Alarmeinrichtung, insbesondere für Lastkraftwagen mit portalähnlichen Rungen (2) mit Aufnahmen (3) zur Halterung von horizontalen Rungenlatten entlang der Längsseite der Ladefläche sowie dem Heck und einer Plane zur Abdeckung des Laderaums, **dadurch gekennzeichnet, dass** die Alarmeinrichtung (1) einen Träger (4) umfasst, welcher im Wesentlichen die Dimension von Rungenlatten hat und mit seinen Enden in den Aufnahmen (3) an den Rungen (2) einsetzbar ist, und dass an oder im Träger (4) ein Sensorantennenabschnitt (5) eines kapazitiven Abstandssensors vorgesehen ist, welcher sich in Längsrichtung des Trägers (4) erstreckt und mit einer Sensorsteuereinheit (6) verbunden ist, welche mit einer Eingabe/Ausgabe-Schnittstelle, einem kapazitiven Sensor, einer Alarmausgabeeinheit sowie einer Energieversorgung ausgestattet ist und am oder im Träger (4) angeordnet ist, und wobei im eingebauten Zustand der Alarmeinrichtung (1) der Sensorantennenabschnitt (5) am oder im Träger (4) elektrisch isoliert von den Rungen (2) des Lastkraftwagen angeordnet ist, und die Sensorsteuereinheit (6) mittels eines elektrisch leitenden Kontakts (7) mit einem Rungen (2) des Lastkraftwagens in Verbindung steht.

2. Alarmeinrichtung nach Anspruch 1, **dadurch gekennzeichnet, dass** der Sensorantennenabschnitt (5) ein Metallband oder ein Draht ist, welcher sich im Inneren des Trägers (4) in dessen Längsrichtung erstreckt oder auf diesem angeordnet ist.

3. Alarmeinrichtung nach Anspruch 1, **dadurch gekennzeichnet, dass** der Sensorantennenabschnitt (5) aus einem zwischen den beiden elektrisch isolierenden Endabschnitten des Trägers (4) angeordneten Trägerabschnitt gebildet ist, welcher beispielsweise aus Aluminium gefertigt ist.

4. Alarmeinrichtung nach Anspruch 2 oder 3, **dadurch gekennzeichnet, dass** das Metallband oder der Draht oder der Trägerabschnitt jeweils mindestens eine Länge von 100mm aufweist.

5. Alarmeinrichtung nach einem der Ansprüche 1 bis 4, **dadurch gekennzeichnet, dass** der elektrisch leitende Kontakt (7) zwischen Sensorsteuereinheit (6) und Rungen (2) des Lastkraftwagens ein gefederter Kontakt (8) ist, welcher im eingesetzten Zustand der Alarmeinrichtung (1) in die Aufnahmen (3) der Rungen (2) gegen diese vorgespannt ist und dadurch einen permanenten Kontakt zur Masse des Lastkraftwagens sicherstellt.

6. Alarmeinrichtung nach einem der Ansprüche 1 bis 5, **dadurch gekennzeichnet, dass** die Alarmausgabeeinheit bei Detektion eines Auslösesignals vom Sensor ein akustisches und/oder optisches Alarmsignal abgibt, und/oder über ein GSM-Modul verfügt und einen Alarmruf an einen Empfänger absendet, wobei nach Detektion eines Signals vom Sensor zuerst ein erstes Alarmsignal abgebbar ist und bei andauerndem Auslösesignal nach einem vorwählbaren Zeitabschnitt Δt ein zweites Alarmsignal und/oder ein Alarmruf abgebbar ist.
